# EUROPEAN PATENT SPECIFICATION

(11) **EP 3 491 544 B1**
(45) Date of publication and mention of the grant of the patent: **07.09.2022**
(21) Application number: 17746267.8
(22) Date of filing: 18.07.2017
(51) Int. Cl.: G06F 16/95, G06Q 30/02, G06F 40/143

(54) **WEB PAGE DISPLAY SYSTEMS AND METHODS**
WEBSEITENANZEIGESYSTEME UND -VERFAHREN
SYSTÈMES ET PROCÉDÉS D'AFFICHAGE DE PAGE WEB

(30) Priority: 26.07.2016 US 201615220330
(43) Date of publication of application: 05.06.2019
(73) Proprietor: Google LLC, Mountain View, CA 94043 (US)
(72) Inventor: HEO, Yun Cheol, Mountain View, California 94043 (US); LEE, Dong Ha, Mountain View, California 94043 (US); LEE, Dong Hwi, Mountain View, California 94043 (US)
(74) Representative: Betten & Resch
(86) International application number: PCT/US2017/042664
(87) International publication number: WO 2018/022359

(56) References cited:
- US-A1- 2015 310 126
- US-B1- 7 617 294
- Brad S Knutson: "Display Loading Image While Page Loads | Brad S. Knutson", , 8 July 2016 (2016-07-08), pages 1-4, XP055400450, Retrieved from the Internet: URL:https://web.archive.org/web/2016070817 0451/http://bradsknutson.com/blog/display- loading-image-while-page-loads/ [retrieved on 2017-08-22]
- Diego Zanon: "AngularJS: How to create a SPA crawlable and SEO friendly? - Zanon", zanon.io, 23 August 2015 (2015-08-23), XP055400429, Retrieved from the Internet: URL:https://zanon.io/posts/angularjs-how-t o-create-a-spa-crawlable-and-seo-friendly [retrieved on 2017-08-22]

## Description

### TECHNICAL FIELD

The present description relates generally to displaying web pages, and more particularly, but not exclusively, to efficient web page display using pre-rendering.

### BACKGROUND

Web pages, particularly rich and dynamic web pages, can take time to load with a web browser. In particular, in order to load a web page associated with a single uniform resource locator (URL) request, there can be as many as, or more than, 100 sub-resources that are obtained and rendered. Sub-resources can include JavaScript resources, style sheet (e.g., cascade style sheet or CSS) resources, and image files. Obtaining and rendering all of the resources for each web page can thus cause an undesirable delay in displaying the web page to a user.

US 2015/0310126A1 relates to the process of rendering web pages with a content delivery system that pre-renders web content for a client device. A web page program can be preexecuted and the result delivered to a requesting client device, rather than or before sending a traditional set of web page components, such as a markup language document, cascading style sheets, embedded objects.

Diego Zanon: "AngularJS: How to create a SPA crawlable and SEO friendly?", 23 August 2015, discloses AngularJS for avoiding full page reloads, and requesting just what is needed when switching to another web page by using SPA (Single-Page Application) which enables thewebsite to provide a more fluid user experience, wherein when a page is loaded, one can browse other links and load new content without the need of a full page reload, wherein only one piece of the page is discarded and replaced by the content of the next page.

### SUMMARY

The scope of the invention is defined by the referenced independent claims to which reference should be made. Preferable embodiments are defined by the dependent claims.

### BRIEF DESCRIPTION OF THE DRAWINGS

Certain features of the subject technology are set forth in the appended claims. However, for purpose of explanation, several embodiments of the subject technology are set forth in the following figures.
FIG. 1 illustrates an example system for web page display in accordance with various aspects of the subject technology.
FIG. 2 illustrates an example web server in accordance with various aspects of the subject technology.
FIG. 3 illustrates an example pre-render server in accordance with various aspects of the subject technology.
FIG. 4 illustrates a flow diagram of an example process for displaying a web page with a web client of a user device in accordance with various aspects of the subject technology.
FIG. 5 illustrates a flow diagram of an example process for displaying a web page based on a pre-render response and a response from the web server in accordance with various aspects of the subject technology.
FIG. 6 illustrates a flow diagram of an example process for providing pre-rendered versions of web pages from a pre-render server in accordance with various aspects of the subject technology.
FIG. 7 conceptually illustrates an electronic system with which some implementations of the subject technology may be implemented in accordance with various aspects of the subject technology.

### DETAILED DESCRIPTION

The detailed description set forth below is intended as a description of various configurations of the subject technology and is not intended to represent the only configurations in which the subject technology may be practiced. The appended drawings are incorporated herein and constitute a part of the detailed description. The detailed description includes specific details for the purpose of providing a thorough understanding of the subject technology.

In some instances, well-known structures and components are shown in block diagram form in order to avoid obscuring the concepts of the subject technology.

The subject disclosure provides systems and methods for reducing web page display times. In some scenarios, a web browser of a user device can locally store some or all of the resources in a cache for a previously-loaded web page so that the resources can be obtained faster to reduce future load times. However, a cache of this type can provide limited or no benefit for web pages that have not been previously loaded by a user or that have not been recently loaded by the user with that particular user device. In other scenarios, linked sub-pages of a currently loaded web page can be pre-rendered by the user's device in the background, while the user views the currently loaded web page, in anticipation of the user navigating to the linked sub-page. However, pre-rendering of linked sub-pages in this way can be undesirably demanding of the user's system resources, particularly for mobile devices.

In particular, the subject disclosure provides systems and methods for providing a pre-rendered version of a web page for display, while rendering the web page. When the web page resources have been obtained and the web page rendered, the pre-rendered web page may be replaced with the freshly rendered web page. In this way, a user can be quickly provided with a visual display of the web page (e.g., the pre-rendered version of the web page), while the resources of the web page are obtained and the web page is rendered. The user can then be provided with a freshly rendered web page that replaces the pre-rendered version.

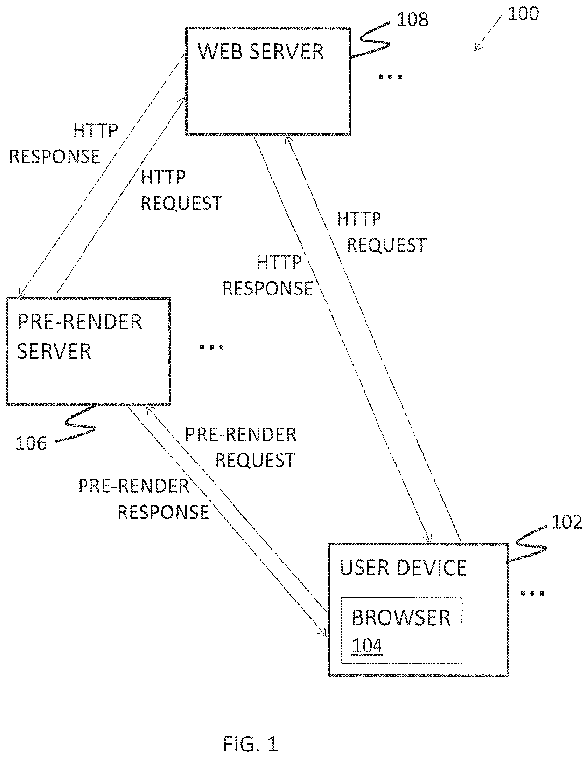

In one implementation, a system may include a plurality of user devices, one or more web servers, and one or more pre-render servers communicatively coupled via a network such as the Internet. Each user device may include a web client such as a web browser application, communications circuitry, and a display. For example, FIG. 1 shows an exemplary implementation in which a user device 102 having a web client such as web browser application 104 (sometimes referred to herein as a browser or a web browser) interacts with a pre-render server 106 and a web server 108 for display of a web page. Although the diagram of FIG. 1 depicts direct communications between user device 102 and pre-render server 106, between user device 102 and web server 108 and between pre-render server 106 and web server 108, it should be appreciated that these communications may be exchanged via a network such as the Internet.

In an exemplary operation, when a user desires to load a web page, the user may provide input to user device 102 to indicate the desire to load the web page (e.g., by entering a URL of the web page into the web browser application 104 or clicking a link to the URL). Of course it should be appreciated that, in other scenarios, a web page load may be initiated automatically by a computing system without receiving a user input.

Responsive to the user input (or other automatic web page load initiation operations), the web browser application 104 sends two requests to two different servers. In particular, as shown in the example of FIG. 1, web browser 104 sends a request (e.g., a hypertext transfer protocol (HTTP) request, a Gopher request, a SPDY^{®} request, or other suitable web page request) to web server 108 (e.g_{.}, a web server that hosts and/or serves the web page such as a web server associated with the URL of the web page) and a pre-render request to pre-render server 106. Pre-render server 106 is a different server from web server 108. For example, pre-render server 106 may be located at a different IP address from web server 108 in some implementations.

The web client (e.g_{.}, web browser application 104) then receives two responses. In particular, as shown in the example of FIG. 1, web browser application 104 receives a response such as an HTTP response from web server 108 and a pre-render response from pre-render server 106. The pre-render response includes a pre-rendered version of the web page. The pre-rendered version of the web page includes a serialized hypertext markup language (HTML) file for the web page.

In an example not part of the invention, if pre-render server 106 does not have a stored pre-rendered version of the web page, the pre-render response may be a null response or other notification to the web client (e.g., to web browser application 104) that no pre-rendered version of the web page is available. As shown in FIG. 1, if pre-render server 106 does not have a stored pre-rendered version of the web page, pre-render server 106 may send an additional request (e.g., an HTTP request or other suitable web page request) to web server 108 so that pre-render server 106 can render and store the web page for future pre-render requests.

In an exemplary operation, a web client such as browser 104 of user device 102 of system 100 sends a request to web server 108 for a web page. The request to web server 108 may, for example, be an HTTP request. An HTTP request may include a request line including a request for a main or index file for the web page and a protocol identifier, a request header that includes (i) a host for the web page at which the index file is located, (ii) acceptable file type identifiers for the web client, (iii) a language preference identifier, (iv) a geographical location identifier for the web client, (v) acceptable encoding scheme identifiers for the web client, and/or (vi) a web client identifier, and a request body (as examples).

The web client of user device 102 concurrently sends a pre-render request for the web page to pre-render server 106. The web client of user device 102 receives a pre-rendered version of the web page from the pre-render server 106. The web client of user device 102 receives a response from web server 108. For example, the response from web server 108 may include an HTML file for the web page. The web client of user device 102 provides the pre-rendered version of the web page for display while rendering the web page based on the response from web server 108.

The pre-rendered version of the web page is a serialized hypertext markup language file for the web page. Providing the pre-rendered version of the web page for display includes providing a serialized data file from which a clone of a previously rendered version of the web page can be generated for display in a browser window such that the clone is viewable, scrollable, and/or interactively available to a viewing user during rendering of the web page received from the web server. The serialized data file is a serialized hypertext markup language file for the web page.

Rendering the web page may include receiving an HTTP response from web server 108 (e.g., a response that includes the requested main or index file for the web page), parsing the received main or index file, generating a Data Object Model (DOM) based on the parsed main or index file, requesting additional resources identified in the main or index file, obtaining the identified resources (e.g., by making additional HTTP requests to the web server and or other web servers), processing scripts and/or style sheets in the obtained resources, and/or modifying and/or supplementing the DOM based on the processed scripts and/or style sheets. The pre-rendered version of the web page is displayed and visible to a viewing user during these rendering operations.

For example, browser 104 may provide the pre-rendered version of the web page for display by user device 102 using a display such as liquid crystal display (LCD), a light emitting diode (LED) display or other suitable display of user device 102. Upon completion of the rendering of the web page based on the response from web server 108, the web client of user device 102 may provide the rendered web page for display in place of the pre-rendered version of the web page. The display of user device 102 may then be updated with the provided rendered web page in place of the displayed pre-rendered version of the web page.

In various embodiments, the web client of user device 102 may also receive additional information from pre-render server 106 (e.g., in addition to the pre-rendered version of the web page). For example, the additional information may include a warning or alert regarding content such as malicious content associated with the web page. The warning or alert may include a filename in the main or index file that is associated with malware or a virus or a domain or host in the main or index file or a linked location therein associated with malware or a virus. The web client of user device 102 may render the web page (e.g., while the pre-rendered version is displayed), at least in part, based on the additional information from the pre-render server. For example, the web client may use the warning or alert to render the web page without the malicious content. For example, the web client, while sending requests for resources in the received main or index file for a web page may omit a request for a file that has been flagged in the additional information from the pre-render server. In some embodiments, pre-render server 106 may also detect and remove the malicious content when generating the pre-rendered version of the web page. In this way, a pre-rendered version of a web page that is free of malicious content associated with the web page can be generated, stored in a pre-render cache, and provided to a client device in response to a pre-render request.

In some embodiments, pre-render server 106 may be provided with advertisement management capabilities. For example, in some scenarios, pre-render server 106 may remove and/or replace advertisements in the web page for the pre-rendered version of the web page. As discussed in further detail hereinafter, pre-render server 106 may remove and/or modify advertisements in a web page based on user preferences (e.g., stored user preferences) , based on preferences, agreements and/or instructions from web server 108, and/or based on preferences, agreements, and/or instructions from particular advertisers.

In an example not part of the invention, the request from user device 102 to web server 108 (e.g., an HTTP request) and the pre-render request from user device 102 may include the same information in a common format, may include the same information in a different format, or the pre-render request may include more, less, and/or different information than the request from user device 102 to web server 108. As defined by the invention, pre-render server 106 is configured to receive and process a pre-render request that is an exact copy of the request sent concurrently to web server 108. In this way, the processing resources of user device 102 and the complexity of the web client (e.g., browser 104) can be reduced by allowing the web client to request a pre-rendered version of a web page from pre-render server 106 by simply sending the same request to the two servers without generating a modified request for the pre-render server.

Pre-render server 106 may store pre-rendered versions of various web pages associated with a particular host in a directory or database associated with that host. For example, pre-render cache 304 may include a database associated with a news website host with a URL of www.samplenewssite.com. Pre-rendered web pages 305 in that database may include a pre-rendered web page associated with a URL of www.samplenewssite.com/index.html, a pre-rendered web page associated with a URL of www.samplenewssite.com/story1/index.html, pre-rendered a web page associated with a URL of www.samplenewssite.com/story2/index.html, a pre-rendered web page associated with a URL of www.samplenewssite.com/story1.html, a pre-rendered web page associated with a URL of www.samplenewssite.com/date/story1.html, a pre-rendered web page associated with a URL of www.samplenewssite.com/date/story2.html, a pre-rendered web page associated with a URL of www.samplenewssite.com/storytitle1.html, and pre-rendered a web page associated with a URL of www.samplenewssite.com/storytitle2.html (as examples).

In this way, pre-render cache can store pre-rendered versions of web pages that can be quickly identified and returned in response to receiving a copy of an HTTP request for the web server of the page. For example, an HTTP request provided from the web client to web server 108 and pre-render server 106 may include a request line for the file /date/story1.html and a request header that identifies www.samplenewssite.com as the host for that file. While web server 108 retrieves the file story1.html from directory /date/ at www.samplenewssite.com, pre-render server may retrieve, from a database at the pre-render server titled "www.samplenewssite.com", a pre-rendered web page titled (for example) "pre-render_date/story1.com". The retrieved pre-rendered web page "pre-render_date/story1.com" (e.g. a serialized HTML file for a previously rendered version of the web page at www.samplenewssite.com/date/story1.html) may be sent to the requesting web client in response to the received HTTP request.

In other examples, not defined by the invention, the pre-render request may include less and/or different information from the request sent from user device 102 to web server 108. For example, in one embodiment, the pre-render request may include a subset of the information included in the request sent from user device 102 to web server 108. In one particular exemplary configuration, the pre-render request may include only the URL of the web page or the URL of the web page and minimal identifying information for the web client (e.g., a browser identifier) and the user (e.g., a language preference or geographical location and/or one or more preferences as discussed herein). Pre-render server 106 may obtain pre-rendered versions of web pages that are stored together with the full URLs of the web pages or may parse the URL of a web page to identify a host and a filename for the web page for obtaining a stored pre-rendered version of the web page. For example, pre-render server 106 may receive a pre-render request that includes a URL of www.samplenewssite.com/date/story1.html . Pre-render server 106 may then extract a host (e.g., www.samplesnewssite.com) and a web page identifier (e.g., "/date/story1.html") from the URL. Pre-render server 106 may then retrieve, from a database at the pre-render server titled "www.samplenewssite.com", a pre-rendered web page titled (for example) "pre-render_date/story1.com". The retrieved pre-rendered web page "pre-render_date/story1.com" (e.g., an image of a previously rendered version of the web page at www.samplenewssite.com/date/story1.html or a serialized HTML file for a previously rendered version of the web page at www.samplenewssite.com/date/story1.html) may be sent to the requesting web client in response to the received pre-render request containing the URL. In this way, pre-rendered versions can be found in the pre-render cache and returned using only a URL of the desired web page received in the pre-render request, in accordance with some implementations.

In some examples, not defined by the invention, the pre-render request may include information that is not included in the HTTP request. For example, in some embodiments, the pre-render request may include advertisement replacement preferences, malicious content protection preferences, other preferences and/or request content that is associated with services offered by pre-render server 106 that may not be offered by web server 108.

In various eamples, not defined by the invention, advertisement replacement preferences included in the pre-render request may include user-selected or automatically-determined (e.g., browser-determined) preferences for removing web page advertisements and/or replacing web page advertisements with different web page advertisements in a pre-rendered version of the web page. For example, a particular pre-render request may include an indication of a user preference for advertisements related to a sports team, a particular retail outlet, or the like. In this scenario, pre-render server 106 may replace an advertisement for one sports team in the web page with an advertisement for the preferred sports team in the pre-rendered version of the web page. These advertisement preference operations may provide the user with an enhanced browsing experience that may not be available in systems that do not include a pre-render server (e.g., because advertisement preference services are not offered by web server 108).

In one example scenario, not defined by the invention, a pre-render request may include a user request for advertisement removal (e.g., an identifier such as "remove-ads" may be included in a pre-render request header). In this example scenario, while rendering the web page at the pre-render server, the pre-render server may identify advertisement resources in the web page (e.g., based on an identified advertisement block in the main or index file of the web page, based on known filenames associated with advertisements, based on domain names or host names associated with advertisers or advertisement providers, or based on other advertisement information in the main or index file or other linked files associated with the web page), prevent retrieval of the identified advertisement resources, and replace the advertisement resources with blank content, with a removed-ad identifier, or with other content in various embodiments.

In another example scenario, not defined by the invention, a pre-render request may include a user request for advertisement replacement with preferred advertiser content (e.g., an identifier such as "replace-ads:preferred_advertiser= 'advertiser1‴ may be included in a pre-render request header). In this example scenario, while rendering the web page at the pre-render server, the pre-render server may identify advertisement resources in the web page associated with advertisers other than the preferred advertiser (e.g., based on an identified advertisement block in the main or index file of the web page, based on known filenames associated with advertisements, based on domain names or host names associated with advertisers or advertisement providers, or based on other advertisement information in the main or index file or other linked files associated with the web page), prevent retrieval of the identified advertisement resources, retrieve advertisement content from the preferred advertiser, and replace the identified advertisement resources with the retrieved preferred advertiser advertisement resources.

In some embodiments, not defined by the invention, a web client such as browser 104 may determine user preferences such as advertisement preferences based on a browsing history or other online profile for that user. The browser-determined preferences may be automatically included in pre-render requests sent by that browser.

In various embodiments, not defined by the invention, malicious content protection preferences included in the pre-render request may include user-selected or automatically-determined (e.g., browser-determined) preferences for removing malicious content from a web page for a pre-rendered version of the web page and/or for providing warnings related to malicious content in the web page. For example, a particular pre-render request may include an indication of a user preference (e.g., a high-security preference, a medium-security preference, or a low-security reference) for malicious content management. In this scenario, pre-render server 106 may block only the highest-risk content when a low-security preference is received in a pre-render request and may block progressively less risky content when a medium-security or high-security preference is received in a pre-render request. These malicious content management preference operations may provide the user with an enhanced browsing experience that may not be available in systems that do not include a pre-render server.

However, these examples, which are not defined by the invention, and in which advertisement and/or malicious content management by pre-render server 106 is based on user preferences included in a pre-render request are merely illustrative. In other embodiments, advertisement and/or malicious content management may be performed by pre-render server 106 without user preferences (e.g., based on server standards and/or agreements) or pre-render server 106 may provide pre-rendered versions of web pages without any advertisement or malicious content management.

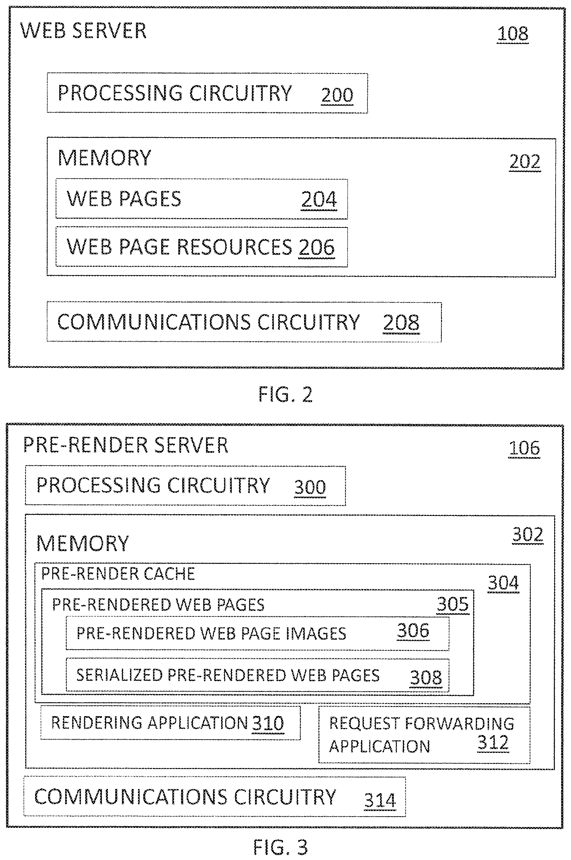

FIG. 2 conceptually illustrates an exemplary implementation of web server 108 in accordance with various aspects of the subject technology. As shown in FIG. 2, web server 108 may include processing circuitry 200, memory 202, and communications circuitry 208. Processing circuitry 200 may include one or more processors configured to receive, via communications circuitry 208, web page requests and provide responses to the received web page requests. For example, processing circuitry 200 may include one or more microprocessors, multi-core processors, and/or one or more integrated circuits, such as application specific integrated circuits (ASICs) or field programmable gate arrays (FPGAs) that load and execute sequences of instructions, software modules, etc. Processing circuitry 200 may execute instructions stored in memory 202. In some implementations, such integrated circuits execute instructions that are stored on the circuit itself.

Memory 202 may store various web pages 204 (e.g., source code for each of a plurality of web pages hosted by server 108) and web page resources 206 (e.g., text files, image files, scripts, etc.), associated with web pages 204. Processing circuitry 200 may be operated to retrieve web pages 204, resources 206, and/or other remotely hosted web pages and/or resources. The retrieved web pages 204, resources 206, and/or other remotely hosted web pages and/or resources may be provided, by processor 200, to various client devices responsive to client requests using communications circuitry 208. Memory 202 may include computer-readable media such as RAM, ROM, read-only compact discs (CD-ROM), recordable compact discs (CD-R), rewritable compact discs (CD-RW), read-only digital versatile discs (e.g_{.}, DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic and/or solid state hard drives, ultra density optical discs, any other optical or magnetic media, and floppy disks. In addition to web pages 204 and web page resources 206, memory 202 can store sets of instructions/code that are executable by processing circuitry 200 including sets of instructions/code that implement the processes described herein. Examples of computer programs or computer code include machine code, such as is produced by a compiler, and files including higher-level code that are executed by a computer, an electronic component, or a microprocessor using an interpreter.

Communications circuitry 208 may include transceiver circuitry, signal processing circuitry, signal generation circuitry, and/or other communications circuitry for communicatively coupling server 108 to a network of computers such as a local area network ("LAN"), a wide area network ("WAN"), or an Intranet, or a network of networks, such as the Internet as would be understood by one skilled in the art.

Processing circuitry 200, memory 202, communications circuitry 208, and/or other components of server 108 may be communicatively connected by a system bus (not shown) that includes system, peripheral, and chipset buses that communicatively connect the numerous internal devices a server such as server 108 as would be understood by one skilled in the art. For instance, a bus may be provided that communicatively connects processing circuitry 200 with memory 202, and communications circuitry 208.

FIG. 3 conceptually illustrates an exemplary implementation of pre-render server 106 in accordance with various aspects of the subject technology. As shown in FIG. 3, pre-render server 106 may include processing circuitry 300, memory 302, and communications circuitry 314.

Processing circuitry 300 may include one or more processors configured to receive, via communications circuitry 314, pre-render requests and provide pre-render responses to the received pre-render requests. For example, processing circuitry 300 may include one or more microprocessors, multi-core processors, and/or one or more integrated circuits, such as application specific integrated circuits (ASICs) or field programmable gate arrays (FPGAs) that load and execute sequences of instructions, software modules, etc. Processing circuitry 300 may execute instructions stored in memory 302. In some implementations, such integrated circuits execute instructions that are stored on the circuit itself.

Memory 302 may include a pre-render cache that stores pre-rendered web pages 305. Memory 302 may include computer-readable media such as RAM, ROM, read-only compact discs (CD-ROM), recordable compact discs (CD-R), rewritable compact discs (CD-RW), read-only digital versatile discs (e.g., DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic and/or solid state hard drives, ultra density optical discs, any other optical or magnetic media, and floppy disks. In addition to pre-render cache 304, memory 302 can store sets of instructions/code that are executable by processing circuitry 300 including sets of instructions/code (e.g., a rendering application 310 and/or a request forwarding application 312) that implement the processes described herein. Examples of computer programs or computer code with which rendering application 310 and/or request forwarding application 312 can be implemented include machine code, such as is produced by a compiler, and files including higher-level code that are executed by a computer, an electronic component, or a microprocessor using an interpreter.

Communications circuitry 314 may include transceiver circuitry, signal processing circuitry, signal generation circuitry, and/or other communications circuitry for communicatively coupling server 106 to a network of computers such as a local area network ("LAN"), a wide area network ("WAN"), or an Intranet, or a network of networks, such as the Internet as would be understood by one skilled in the art.

Processing circuitry 300, memory 302, communications circuitry 314, and/or other components of server 106 may be communicatively connected by a system bus (not shown) that includes system, peripheral, and chipset buses that communicatively connect the numerous internal devices a server such as server 106 as would be understood by one skilled in the art. For instance, a bus may be provided that communicatively connects processing circuitry 300 with memory 302, and communications circuitry 314.

Pre-rendered web pages 305 may include pre-rendered versions of various web pages such as web pages 204 of FIG. 2. As shown, pre-rendered web pages 305 includes serialized pre-rendered web pages 308. Serialized pre-rendered web pages 308 may include serialized versions of web pages such as serialized hypertext markup language versions of web pages.

A serialized version of a web page may include, for example, a single file or packet of files that includes the web page, substantially all of the resources for the web page, and substantially all of the instructions needed by a web client for display of the web page and resources. The serialized version may be coded in accordance with one of various serialization standards as would be understood by one skilled in the art. For example, in some implementations, a serialized version of a web page may include one or more embedded coded strings that are not readable by humans. The coded strings may be embedded within human-readable/machine-readable code such as HTML code. For example, for a web page that contains an image, pre-render server 106 serializes the web page, in part, by encoding a separate binary-format version of the image into a more compact non-human-readable string (e.g., an ASCII string coded in a Base64 or other binary-to-text encoding format), and embedding the string within the serialized web page source. For example, the string may be included as a source to an <img> tag in a serialized HTML file for the web page. Serialization of the webpage in that manner allows to retrieve the serialized version of the webpage from the pre-render server with a single request and thus makes obtaining the pre-rendered version of the webpage from the pre-render server particularly efficient in comparison to obtaining the webpage from its original webserver and other servers on which content, such as for example images, for the webpage is hosted.

Processing circuitry 300 may be operated to render web pages (e.g., according to instructions associated with a rendering application 310 stored in memory 302) to form pre-rendered versions of the web pages, store the pre-rendered versions of the web pages in pre-render cache 304, and retrieve pre-rendered web pages 305 from the pre-render cache. The retrieved pre-rendered web pages 305 (e.g., pre-rendered versions of web pages 204) may be sent, by processor 300, to various client devices responsive to client pre-render requests using communications circuitry 314.

In an exemplary operation, pre-render server 106 may receive, from a client device such as user device 102 of FIG. 1, a pre-render request for a web page. Responsive to the pre-render request, processing circuitry 300 may be operated to determine whether a pre-rendered version of the web page is present in pre-render cache 304 (e.g., by determining whether one of a plurality of pre-rendered web pages 305 corresponds to the web page). If a pre-rendered version of the web page is present in pre-render cache 304, processing circuitry 300 may cooperate with communications circuitry 314 to send the pre-rendered version of the web page to the requesting client device.

If no pre-rendered version of the web page is present in pre-render cache 304, processing circuitry 300 may cooperate with communications circuitry 314 (e.g., according to instructions associated with a request forwarding application 312 stored in memory 302) to send (e.g., forward) a request for the web page to web server 108. Rendering application 310 may then render the web page based on one or more responses from web server 108 and store the rendered web page as a pre-rendered web page 305 for a later pre-render request for that web page.

Pre-render server 106 may manage pre-rendered versions of web pages in pre-render cache 304 to ensure that updated pre-rendered versions are available in the cache and/or avoid inefficient use of storage space. For example, pre-render server 106 may periodically request and render a new version of a web page for which a pre-rendered version of the web page is already stored in the pre-render cache. The newly rendered version of the web page may be stored in place of or in addition to previously rendered versions of the web page. For example, in one implementation, one or more previously rendered versions of the web page that are stored as pre-rendered versions of the web page may be deleted from the pre-render cache and replaced with the newly rendered version. In another implementation, one or more previously rendered versions of the web page that are stored as pre-rendered versions of the web page in the pre-render cache may be moved to an archive database at the pre-render server 106 or remote from pre-render server 106 and replaced with the newly rendered version.

As examples, removal and/or updating of pre-rendered versions of web pages stored in the pre-render cache may be performed based on the age of the pre-rendered versions (e.g., a set of the oldest pre-rendered web pages in the cache may be removed periodically), and/or based on popularity of the web page (e.g., pre-rendered versions of frequently-requested web pages may be frequently updated and replaced and/or pre-rendered versions of infrequently-requested web pages may be removed without replacement).

In some implementations, removal and/or updating of pre-rendered versions of web pages stored in the pre-render cache may be performed based on web page content. For example, pre-rendered versions of web pages that include content that is updated multiple times per day (e.g., based on news updates or other content updates) may be removed and replaced with newly pre-rendered versions multiple times per day.

In various embodiments, some or all of pre-rendered web pages 305 may differ from the web pages with which they are associated (e.g., by including different advertisements or removed malicious content as discussed herein).

Pre-render server 106 may accumulate pre-rendered web pages in pre-render cache 304 based on pre-render requests from users and/or based on lists (e.g., popularity-sorted lists) of web pages known to exist. For example, pre-render server 106 may send requests such as HTTP requests to various web servers associated with various web pages, obtain the associated resources for each web page, render each web page, and store a pre-rendered version of each of the various web pages in pre-render cache 304.

In some embodiments, pre-render server 106 may render and store a plurality of pre-rendered versions of each web page. Web pages may be provided to users with content that is included particularly for that user. For example, a web server may provide web pages with different geography-based content to users in different geographical locations (e.g., in different countries, in different states, in different cities, etc.). The different content may include different information such as different articles, different images, or different advertisements and/or may include the same information presented differently (e.g., in a different format or in a different human language).

Pre-render server 106 may render and store more than one pre-rendered version of a web page, each with geography-based content as discussed herein. For example, pre-render server 106 may use proxy servers in various geographical locations to send requests to web server 108 to receive web pages from web server 108 that are specific to the various geographical locations. In this way, a pre-rendered version of the web page may be generated that includes geography-based content and the pre-render cache may include at least one additional pre-rendered version of the web page that includes different geography-based content in some embodiments. Geography-specific pre-rendered versions of each web page may be stored in geography-specific databases or directories in the pre-render cache or may be stored in a common directory for that web page and labeled with geography-based filenames or other geography-based identifiers. For example, pre-rendered European and U.S. versions of a web page with a URL of www.samplenewssite.com/story1.html may be stored in database for www.samplenewssite.com in a pre-render cache as /EP/story1.html and /US/story1.html or as /EP-story1.html and /US-story1.html (as examples). The European and U.S. versions of the web page may include similar content in different languages (e.g., common articles respectively in French and English) and/or different content (e.g., different headline stories related to different events respectively in Europe and the United States). The European and U.S. versions of the web page may be versions of the web page that would be displayed to user accessing the web page from a user device located respectively in Europe and the U.S.

A geography-specific pre-rendered version of a web page, specific to a particular geographical region, may then be selected from multiple pre-rendered versions of that web page in pre-render cache 304 responsive to a pre-render request from a client device in that particular geographical location (e.g., based on an identified location of the requesting client device and/or based on a geographical identifier in a pre-render request header).

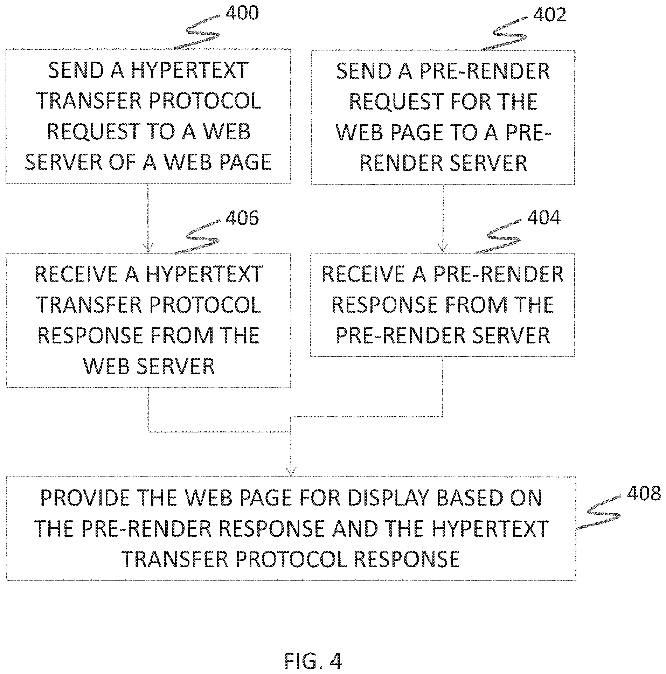

FIG. 4 depicts a flow diagram of an example process for displaying a web page with a client device, according to aspects of the subject technology. For explanatory purposes, the example process of FIG. 4 is described herein with reference to the components of FIGS. 1-3. Further for explanatory purposes, the blocks of the example process of FIG. 4 are described herein as occurring in serial, or linearly. However, multiple blocks of the example process of FIG. 4 may occur in parallel. In addition, the blocks of the example process of FIG. 4 need not be performed in the order shown and/or one or more of the blocks of the example process of FIG. 4 need not be performed.

In the depicted example flow diagram, at block 400, an electronic device such as user device 102 of FIG. 1 uses a web client to send a request (e.g., an HTTP request) to a web server of a web page such as web server 108.

At block 402, with the web client, a pre-render request for the web page is sent to a pre-render server such as pre-render server 106.

At block 404, with the web client, a pre-render response is received from the pre-render server. In some embodiments, additional information may be received with or within the pre-render response. For example, the additional information may include a warning associated with content of the web page such as malicious content (e.g., malware, a virus, etc.).

At block 406, with the web client, a response such as an HTTP response may be received from the web server.

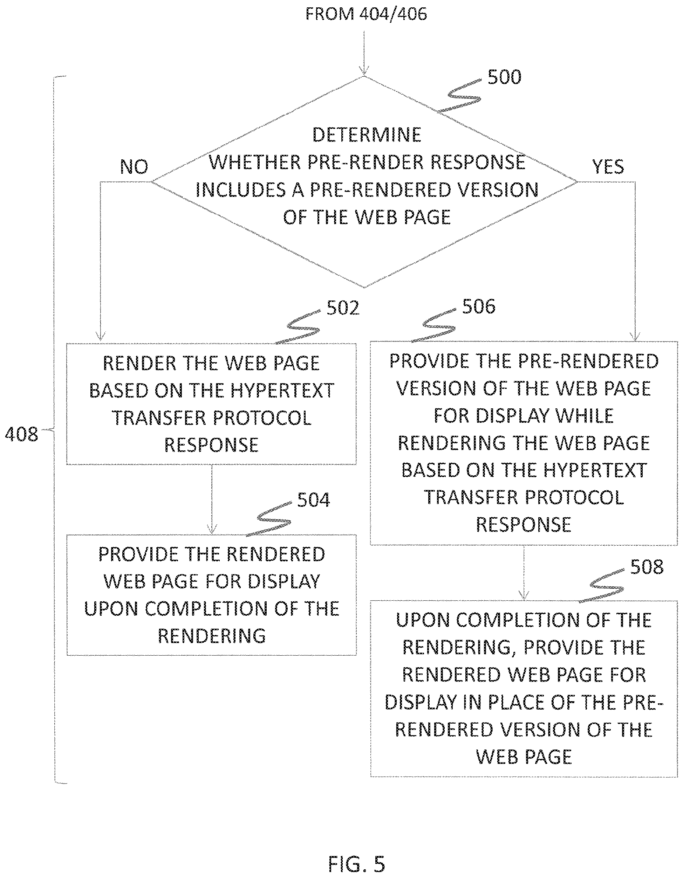

At block 408, with the web client, the web page may be provided for display based on the pre-render response and the response from the web server. In some embodiments, the web page may be provided for display based on the additional information received from the pre-render server. Illustrative operations that may be performed for providing the web page for display based on the pre-render response, the response from the web server, and/or the additional information as described above in connection with block 408 are shown in FIG. 5.

In an example not defined by the invention, as shown in FIG. 5, at block 500, the web client may determine whether the pre-render response received from pre-render server 106 includes a pre-rendered version of the web page.

If it is determined that the pre-render response does not include a pre-rendered version of the web page (e.g., if the pre-render response is a null response), at block 502, the web client may render the web page based on the response (e.g., a HTTP response) received from the web server and, at block 504, provide the rendered web page for display upon completion of the rendering. Providing the rendered web page for display may include providing the web page to display circuitry of the client device for display to a user.

If it is determined that the pre-render response includes a pre-rendered version of the web page, at block 506, the web client may provide the pre-rendered version of the web page for display while rendering the web page based on the response (e.g., an HTTP response) from the web server (e.g., in the background). If additional information (e.g., a warning regarding malicious content in the web page) has been received from the pre-render server, while the pre-rendered version is displayed, the web page may be rendered based on the response from the web server and based on the additional information (e.g., by removing the malicious content).

At block 508, upon completion of the rendering of the web page based on the response from the web server and/or the additional information from the pre-render server, the web client may provide the rendered web page for display in place of the pre-rendered version of the web page. The display circuitry may then replace, on the display, the pre-rendered version of the web page with the freshly rendered version of the web page.

The display circuitry may replace the pre-rendered version with the freshly rendered version in by replacing the displayed pre-rendered version with the freshly rendered version in a manner that is detectable or undetectable by the viewing user. For example, the display circuitry may fade out the pre-rendered version while fading in the freshly rendered web page, may fade out portions (e.g., active portions) of the pre-rendered version while fading in corresponding portions of the freshly rendered web page while leaving other portions (e.g., inactive portions) of the pre-rendered web page displayed, or may otherwise replace the pre-rendered version of the web page with the freshly rendered version of the web page in a manner that provides a visual indication to the viewing user that the pre-rendered version is being replaced. However, this example is merely illustrative. In another example, the display circuitry may replace the entirety of the pre-rendered version with the entirety of the freshly rendered web page during a display refresh period so that the replacement is visually undetectable to the viewing user. In yet another example, the display circuitry may replace portions (e.g., active portions) of the pre-rendered version with corresponding portions of the freshly rendered web page during a display refresh period so that the replacement is visually undetectable to the viewing user.

In one implementation , not defined by the invention, in which the pre-rendered version of the web page is an image of the web page, portions of the image that correspond to active links, video, or other active portions of the web page can be instantaneously (e.g., between display refresh frames), or smoothly replaced on the display with the corresponding active links, video, etc.

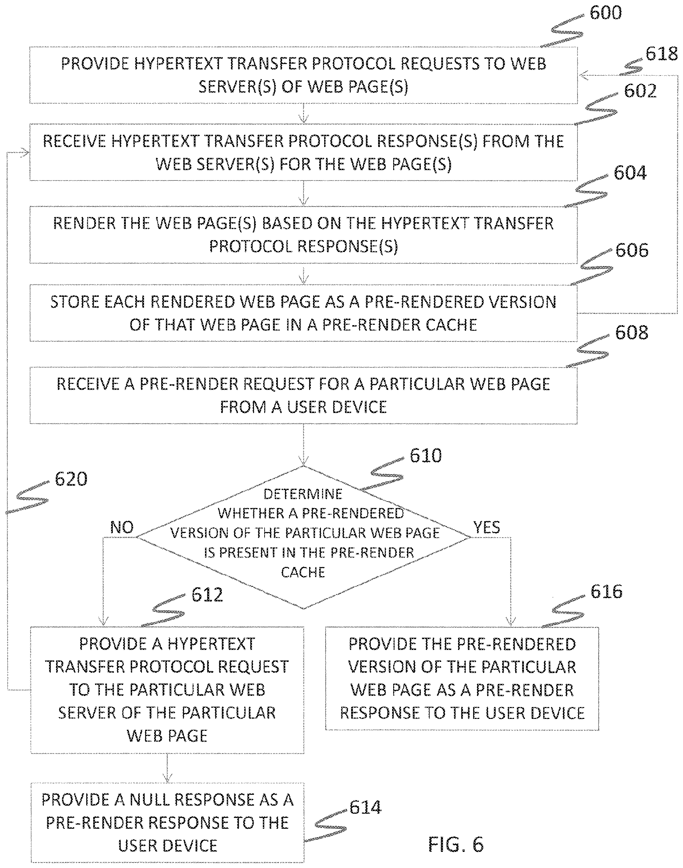

FIG. 6 depicts a flow diagram of an example process for providing pre-rendered versions of a web page, according to aspects of the subject technology. For explanatory purposes, the example process of FIG. 6 is described herein with reference to the components of FIGS. 1-3. Further for explanatory purposes, the blocks of the example process of FIG. 6 are described herein as occurring in serial, or linearly. However, multiple blocks of the example process of FIG. 6 may occur in parallel. In addition, the blocks of the example process of FIG. 6 need not be performed in the order shown and/or one or more of the blocks of the example process of FIG. 6 need not be performed.

In the depicted example flow diagram, at block 600, a pre-render server such as pre-render server 106 of FIGS. 1 and 3 may provide requests such as HTTP requests to one or more servers of one or more web pages. The requests may be provided in response to determining that a web page does not have a pre-rendered version present in a pre-render cache of the pre-render server and/or based on a list of web pages for pre-rendering.

At block 602, the pre-render server may receive responses such as HTTP responses from the web servers for the one or more web pages in response to the provided requests.

At block 604, the one or more web pages may be rendered, by the pre-render server, based on the received responses from the one or more web servers.

At block 606, each rendered web page may be stored as a pre-rendered version of that web page in a pre-render cache. For example, storing a pre-rendered version of the web page may include generating a still image of the rendered web page and saving the still image, with identifying information for the web page, in the pre-render cache. The still image may be devoid of active content or may include embedded links for obtaining active content. For example, the pre-render server may capture and store a still image of all of the content initially displayed on the web page (e.g., text, still images, and initial configurations of active content). However, in some scenarios, the pre-render server may embed, in the still image, hyperlinks from the web page at appropriate locations in the still image so that, if the viewing user desires to follow a link to another web page before the web page is freshly rendered at the web client, the hyperlink can be clicked and followed from within the still image.

As another example, storing the pre-rendered version of the web page may include generating, from the rendered web page and associated obtained resources as rendered, a single file or packet of files that includes the web page, substantially all of the resources for the web page (e.g., encoded and embedded within the single file or packet of files as described herein), and substantially all of the instructions needed by a web client for display of the web page and resources.

Pre-render server 106 may store pre-rendered versions of web pages in a data structure that facilitates efficient identification of the stored pre-rendered versions. For example, pre-render server 106 may store pre-rendered versions of various web pages organized by a date of the pre-render, organized by a geographical location or a language associated with the pre-rendered version, and/or organized by a particular host in a directory or database associated with that host. For example, pre-render cache 304 may include a database associated with a news website host with a URL of www.samplenewssite.com and with a date of January 1, 2015 (e.g., a database entitled or indexed as "2015/01/01-www.samplenewssite.com"). Pre-rendered web pages 305 in that database may include a pre-rendered web page associated with a URL of www.samplenewssite.com/ index.html as generated on 01/01/2015, a pre-rendered web page associated with a URL of www.samplenewssite.com/story1/index.html as generated on 01/01/2015, pre-rendered a web page associated with a URL of www.samplenewssite.com/story2/index.html as generated on 01/01/2015, a pre-rendered web page associated with a URL of www.samplenewssite.com/story1.html as generated on 01/01/2015, a pre-rendered web page associated with a URL of www.samplenewssite.com/date/story1.html as generated on 01/01/2015, a pre-rendered web page associated with a URL of www.samplenewssite.com/date/story2.html as generated on 01/01/2015, a pre-rendered web page associated with a URL of www.samplenewssite.com/storytitle1.html as generated on 01/01/2015, and pre-rendered a web page associated with a URL of www.samplenewssite.com/storytitle2.html as generated on 01/01/2015 (as examples). In some embodiments, the database 2015/01/01-www.samplenewssite.com in the pre-render cache may be maintained and updated throughout the day on January 1, 2015 and may be deprecated, archived, and/or replaced on the following day (for example).

As discussed herein, in some embodiments, one or more pre-rendered versions (e.g., geography-specific versions having geography-based content associated with particular geographical location or region) may be stored in the pre-render cache for each web page (e.g., in a geography-specific database in the pre-render cache or a geography tagged or titled files in the pre-render cache). As indicated by arrow 618, the operations described above in connection with blocks 600-606 may be repeated (e.g., until all web pages in a list have been pre-rendered, or continuously or periodically during operation of the pre-render server).

At block 608, a pre-render request for a particular web page may be received from a client device such as user device 102 of FIG. 1. The pre-render request may be a pre-render request for a particular web page that is hosted on a particular server different from the pre-render server (e.g., web server 108 of FIG. 1).

At block 610, the pre-render server may determine whether a pre-rendered version of the particular web page of the pre-render request is present in the pre-render cache. For example, a pre-render request may identify a web page associated with a URL such as www.samplenewssite.com/date/story1.html. While web server 108 retrieves the file story1.html from directory /date/ at www.samplenewssite.com, pre-render server 106 may search a database associated with host www.samplenewssite.com in the pre-render cache for a filename or index associated with the file /date/story1.html (e.g., for a file entitled "pre-render_date/story1.com"). In some scenarios, determining whether a pre-rendered version of the particular web page of the pre-render request is present in the pre-render cache may include extracting and parsing (e.g., from a URL of the particular web page in the pre-render request) a host name and a file name for the web page prior to searching the database associated with the host. The pre-render server may send a pre-render response to the user device based on whether the pre-rendered version of the particular web page is present in the pre-render cache.

For example, if it is determined that one or more pre-rendered versions of the particular web page of the pre-render request is present in the pre-render cache, at block 616, the pre-render server may send a selected one of the pre-rendered versions of the particular web page to the user device.

In another example, if it is determined that no pre-rendered versions of the particular web page are present in the pre-render cache, at block 612, the pre-render server may provide a request such as a hypertext transfer protocol request to the particular web server of the particular web page and, at block 614 may provide a null response as the pre-render response to the user device. As indicated by arrow 620, the operations described above in connection with blocks 602, 604, and 606 may be repeated for the particular web page to render and store a pre-rendered version of the particular web page for future pre-render requests.

The systems and method discussed above in connection with, for example, FIGS. 1-6 can provide users with faster, more efficient browsing of web pages. These systems and methods of the subject disclosure can be particularly beneficial to users with low computational power devices or with low network bandwidth.

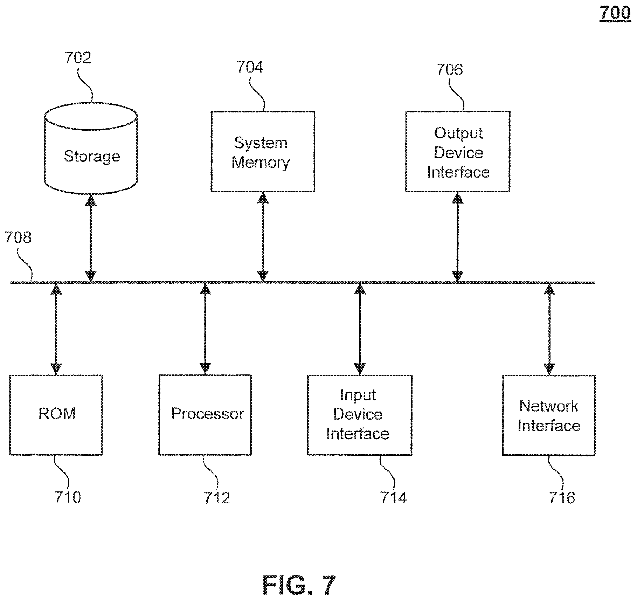

FIG. 7 conceptually illustrates an electronic system with which some implementations of the subject technology are implemented. Electronic system 700 can be a server (e.g., an implementation of web server 108 or pre-render server 106 of FIG. 1), a user device, a computer, a phone, a PDA, a tablet computer, a television with one or more processors embedded therein or coupled thereto, or generally any electronic device. Such an electronic system includes various types of computer readable media and interfaces for various other types of computer readable media. Electronic system 700 includes a bus 708, processing unit(s) 712, a system memory 704, a read-only memory (ROM) 710, a permanent storage device 702, an input device interface 714, an output device interface 706, and a network interface 716.

Bus 708 collectively represents all system, peripheral, and chipset buses that communicatively connect the numerous internal devices of electronic system 700. For instance, bus 708 communicatively connects processing unit(s) 712 with ROM 710, system memory 704, and permanent storage device 702.

From these various memory units, processing unit(s) 712 retrieves instructions to execute and data to process in order to execute the processes of the subject disclosure. The processing unit(s) can be a single processor or a multi-core processor in different implementations.

ROM 710 stores static data and instructions that are needed by processing unit(s) 712 and other modules of the electronic system. Permanent storage device 702, on the other hand, is a read-and-write memory device. This device is a non-volatile memory unit that stores instructions and data even when electronic system 700 is off. Some implementations of the subject disclosure use a mass-storage device (such as a magnetic or optical disk and its corresponding disk drive) as permanent storage device 702.

Other implementations use a removable storage device (such as a floppy disk, flash drive, and its corresponding disk drive) as permanent storage device 702. Like permanent storage device 702, system memory 704 is a read-and-write memory device. However, unlike storage device 702, system memory 704 is a volatile read-and-write memory, such a random access memory. System memory 704 stores some of the instructions and data that the processor needs at runtime. In some implementations, the processes of the subject disclosure are stored in system memory 704, permanent storage device 702, and/or ROM 710. For example, the various memory units may include instructions for processing, generating, and/or providing verification requests and/or verification responses in accordance with some implementations. From these various memory units, processing unit(s) 712 retrieves instructions to execute and data to process in order to execute the processes of some implementations.

Bus 708 also connects to input and output device interfaces 714 and 706. Input device interface 714 enables the user to communicate information and select commands to the electronic system. Input devices used with input device interface 714 include, for example, alphanumeric keyboards and pointing devices (also called "cursor control devices"). Output device interfaces 706 enables, for example, the display of images generated by the electronic system 700. Output devices used with output device interface 706 include, for example, printers and display devices, such as cathode ray tubes (CRT) or liquid crystal displays (LCD). Some implementations include devices such as a touchscreen that functions as both input and output devices.

Finally, as shown in FIG. 7, bus 708 also couples electronic system 700 to a network (not shown) through a network interface 716. In this manner, the computer can be a part of a network of computers (such as a local area network ("LAN"), a wide area network ("WAN"), or an Intranet, or a network of networks, such as the Internet. Any or all components of electronic system 700 can be used in conjunction with the subject disclosure.

These functions described above can be implemented in digital electronic circuitry, in computer software, firmware or hardware. The techniques can be implemented using one or more computer program products. Programmable processors and computers can be included in or packaged as mobile devices. The processes and logic flows can be performed by one or more programmable processors and by one or more programmable logic circuitry. General and special purpose computing devices and storage devices can be interconnected through communication networks.

Some implementations include electronic components, such as microprocessors, storage and memory that store computer program instructions in a machine-readable or computer-readable medium (alternatively referred to as computer-readable storage media, machine-readable media, or machine-readable storage media). Some examples of such computer-readable media include RAM, ROM, read-only compact discs (CD-ROM), recordable compact discs (CD-R), rewritable compact discs (CD-RW), read-only digital versatile discs (e.g., DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic and/or solid state hard drives, ultra density optical discs, any other optical or magnetic media, and floppy disks. The computer-readable media can store a computer program that is executable by at least one processing unit and includes sets of instructions for performing various operations. Examples of computer programs or computer code include machine code, such as is produced by a compiler, and files including higher-level code that are executed by a computer, an electronic component, or a microprocessor using an interpreter.

While the above discussion primarily refers to microprocessor or multi-core processors that execute software, some implementations are performed by one or more integrated circuits, such as application specific integrated circuits (ASICs) or field programmable gate arrays (FPGAs). In some implementations, such integrated circuits execute instructions that are stored on the circuit itself.

As used in this specification and any claims of this application, the terms "computer", "server", "processor", and "memory" all refer to electronic or other technological devices. These terms exclude people or groups of people. For the purposes of the specification, the terms "display" or "displaying" means displaying on an electronic device. As used in this specification and any claims of this application, the terms "computer readable medium" and "computer readable media" are entirely restricted to tangible, physical objects that store information in a form that is readable by a computer. These terms exclude any wireless signals, wired download signals, and any other ephemeral signals.

To provide for interaction with a user, implementations of the subject matter described in this specification can be implemented on a computer having a display device, such as a CRT (cathode ray tube) or LCD (liquid crystal display) monitor, for displaying information to the user and a keyboard and a pointing device, such as a mouse or a trackball, by which the user can provide input to the computer. Other kinds of devices can be used to provide for interaction with a user as well; for example, feedback provided to the user can be any form of sensory feedback, such as visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages or pre-rendered web pages to a web browser on a user's client device in response to requests received from the web browser.

Embodiments of the subject matter described in this specification can be implemented in a computing system that includes a back end component, such as a data server, or that includes a middleware component, such as an application server, or that includes a front end component, such as a client computer having a graphical user interface or a Web browser through which a user can interact with an implementation of the subject matter described in this specification, or any combination of one or more such back end, middleware, or front end components. The components of the system can be interconnected by any form or medium of digital data communication, such as a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

Many of the above-described features and applications are implemented as software processes that are specified as a set of instructions recorded on a computer readable storage medium (also referred to as computer readable medium). When these instructions are executed by one or more processing unit(s) (e.g., one or more processors, cores of processors, or other processing units), they cause the processing unit(s) to perform the actions indicated in the instructions. Examples of computer readable media include, but are not limited to, CD-ROMs, flash drives, RAM chips, hard drives, EPROMs, etc. The computer readable media does not include carrier waves and electronic signals passing wirelessly or over wired connections.

In this specification, the term "software" is meant to include firmware residing in read-only memory or applications stored in magnetic storage, which can be read into memory for processing by a processor. Also, in some implementations, multiple software aspects of the subject disclosure can be implemented as sub-parts of a larger program while remaining distinct software aspects of the subject disclosure. In some implementations, multiple software aspects can also be implemented as separate programs. Finally, any combination of separate programs that together implement a software aspect described here is within the scope of the subject disclosure. In some implementations, the software programs, when installed to operate on one or more electronic systems, define one or more specific machine implementations that execute and perform the operations of the software programs.

A computer program (also known as a program, software, software application, script, or code) can be written in any form of programming language, including compiled or interpreted languages, declarative or procedural languages, and it can be deployed in any form, including as a stand alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

It is understood that any specific order or hierarchy of blocks in the processes disclosed is an illustration of example approaches. Based upon design preferences, it is understood that the specific order or hierarchy of blocks in the processes may be rearranged, or that all illustrated blocks be performed. Some of the blocks may be performed simultaneously. For example, in certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Further to the descriptions above, a user may be provided with controls allowing the user to make an election as to both if and when systems, programs or features described herein may enable collection of user information (e.g., information about a user's preferences, or a user's current geographical location), and if the user is sent content or communications from a server. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over what information is collected about the user, how that information is used, and what information is provided to the user.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language claims, wherein reference to an element in the singular is not intended to mean "one and only one" unless specifically so stated, but rather "one or more." Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

The term website, as used herein, may include any aspect of a website, including one or more web pages, one or more servers used to host or store web related content, and the like. Accordingly, the term website may be used interchangeably with the terms web page and server. The predicate words "configured to", "operable to", and "programmed to" do not imply any particular tangible or intangible modification of a subject, but, rather, are intended to be used interchangeably. For example, a processor configured to monitor and control an operation or a component may also mean the processor being programmed to monitor and control the operation or the processor being operable to monitor and control the operation. Likewise, a processor configured to execute code can be construed as a processor programmed to execute code or operable to execute code

A phrase such as an "aspect" does not imply that such aspect is essential to the subject technology or that such aspect applies to all configurations of the subject technology. A disclosure relating to an aspect may apply to all configurations, or one or more configurations. A phrase such as an aspect may refer to one or more aspects and vice versa. A phrase such as a "configuration" does not imply that such configuration is essential to the subject technology or that such configuration applies to all configurations of the subject technology. A disclosure relating to a configuration may apply to all configurations, or one or more configurations. A phrase such as a configuration may refer to one or more configurations and vice versa.

In a further example, a pre-render server may generate and store pre-rendered versions of web pages in a pre-render cache. To display a web page, a web client may concurrently send a pre-render request for the web page to the pre-render server and a request for the web page to a web server of the web page. The web client may receive a pre-rendered version of the web page from the pre-render server and a response from the web server. The web client may provide the pre-rendered version of the web page for display while rendering the web page, in the background, based on the response from the web server. Upon completion of the rendering, the web client may provide the freshly rendered web page for display in place of the pre-rendered version.

The word "example" is used herein to mean "serving as an example or illustration." Any aspect or design described herein as "example" is not necessarily to be construed as preferred or advantageous over other aspects or design

Furthermore, to the extent that the term "include," "have," or the like is used in the description or the claims, such term is intended to be inclusive in a manner similar to the term "comprise" as "comprise" is interpreted when employed as a transitional word in a claim.

## Claims

1. A computer-implemented method, comprising:
sending (400) a request for a web page from a web client of an electronic device (102) to a web server (108), the web page including at least one image;
prior to receiving a response from the web server for the request for the web page, sending (402) from the web client of the electronic device a pre-render request for the web page to a pre-render server (106), the pre-render server being different than the web server, wherein the pre-render request is a copy of the request for the web page and is sent concurrently with the request for the web page to the web server;
serializing, by the pre-render server, at least one of a hypertext markup language file for the web page, at least in part, by encoding a separate binary-format version of the at least one image into a non-human-readable string, and embedding the non-human-readable string into the at least one serialized hypertext markup language file for the web page;
receiving (404) at the web client of the electronic device a pre-render response from the pre-render server, the pre-render response comprising a pre-rendered version of the web page including the at least one serialized file for the web page;
receiving (406) at the web client of the electronic device the response from the web server comprising a main or index file for the web page;
providing (408) by the web client of the electronic device the pre-rendered version of the web page for display while rendering the web page based on the response from the web server; and
upon completion of the rendering, providing (504) the rendered web page for display in place of the pre-rendered version of the web page.

2. The computer-implemented method of claim 1, wherein the receiving at the web client of the pre-render response from the pre-render server, comprises receiving additional information regarding the web page from the pre-render server;
wherein the web client, while sending requests for resources in the received main or index file for the web page, omits a request for a file that has been flagged as being malicious in the additional information from the pre-render server, and
wherein the pre-rendered version of the web page, as received from the pre-render server, has malicious content removed therefrom.

3. The computer-implemented method of claim 2, wherein the web page is rendered based, at least in part, on the additional information from the pre-render server.

4. The computer-implemented method of claim 3, wherein the additional
information comprises a warning associated with content of the web page.

5. A system, comprising:
one or more processors; and
a memory device including processor-readable instructions, which when executed by the one or more processors, configure the one or more processors to perform operations comprising:
sending (400) a request for a web page to a web server (108), the web page including at least one image;
prior to receiving a response from the web server for the request for the web page, sending (402) a pre-render request for the web page to a pre-render server (106), the pre-render server being different than the web server, wherein the pre-render request is a copy of the request for the web page and is sent concurrently with the request for the web page to the web server;
serializing, by the pre-render server, at least one of a hypertext markup language file for the web page, at least in part, by encoding a separate binary-format version of the at least one image into a non-human-readable-string, and embedding the non-human-readable string into the at least one serialized hypertext markup language file for the web page;
receiving (404) a pre-rendered version of the web page from the pre-render server, wherein the pre-rendered version of the web page includes the at least one serialized HTML file for the web page;
receiving (406) the response from the web server comprising a main or index file for the web page;
providing (408) the pre-rendered version of the web page for display while rendering the web page based on the response from the web server; and
upon completion of the rendering, providing (504) the rendered web page for display in place of the pre-rendered version of the web page.

6. The system of claim 5,
wherein the receiving of the pre-render version from the pre-render server, comprises receiving additional information regarding the web page from the pre-render server; and
wherein the system, while sending requests for resources in the received main or index file for the web page, omits a request for a file that has been flagged as being malicious in the additional information from the pre-render server.

7. The system of claim 5,
wherein the web page is rendered based, at least in part, on the additional information from the pre-render server.

8. The system of claim 7,
wherein the pre-rendered version of the web page, as received from the pre-render server, has malicious content removed therefrom.

## Patentansprüche

1. Computerimplementiertes Verfahren, umfassend:
Senden (400) einer Anfrage für eine Webseite von einem Web-Client einer elektronischen Vorrichtung (102) an einen Web-Server (108), wobei die Webseite mindestens ein Bild enthält;
vor Empfangen einer Antwort von dem Webserver für die Anfrage der Webseite, Senden (402) von dem Web-Client der elektronischen Vorrichtung einer Prerender-Anfrage für die Webseite an einen Prerender-Server (106), wobei sich der Prerender-Server von dem Webserver unterscheidet, wobei die Prerender-Anfrage eine Kopie der Anfrage für die Webseite ist und gleichzeitig mit der Anfrage für die Webseite an den Web-Server gesendet wird;
Serialisieren, durch den Prerender-Server, von mindestens einer Hypertext-Markup-Language-Datei für die Webseite, zumindest teilweise, durch Codieren einer separaten Binärformat-Version des mindestens einen Bildes in eine nicht von Menschen lesbare Zeichenkette, und Einbetten der nicht von Menschen lesbaren Zeichenkette in die mindestens eine serialisierte Hypertext-Markup-Language-Datei für die Webseite;
Empfangen (404) an dem Web-Client der elektronischen Vorrichtung einer Prerender-Antwort von dem Prerender-Server, wobei die Prerender-Antwort eine Prerender-Version der Webseite einschließlich der mindestens einen serialisierten Datei für die Webseite umfasst;
Empfangen (406) an dem Web-Client der elektronischen Vorrichtung der Antwort von dem Web-Server, die eine Haupt- oder Indexdatei für die Webseite umfasst;
Bereitstellen (408) durch den Web-Client der elektronischen Vorrichtung der Prerender-Version der Webseite zur Anzeige während des Renderns der Webseite basierend auf der Antwort von dem Web-Server; und
nach Beendigung des Renderns, Bereitstellen (504) der gerenderten Webseite zur Anzeige anstelle der Prerender-Version der Webseite.

2. Computerimplementiertes Verfahren nach Anspruch 1, wobei das Empfangen der Prerender-Antwort von dem Prerender-Server an dem Web-Client das Empfangen zusätzlicher Informationen bezüglich der Webseite von dem Prerender-Server umfasst;
wobei der Web-Client, während er Anfragen für Ressourcen in der empfangenen Haupt- oder Indexdatei für die Webseite sendet, eine Anfrage für eine Datei auslässt, die in den zusätzlichen Informationen von dem Prerender-Server als schädlich gekennzeichnet worden ist, und
wobei die Prerender-Version der Webseite, wie sie von dem Prerender-Server empfangen wird, von schädlichen Inhalten befreit ist.

3. Computerimplementiertes Verfahren nach Anspruch 2, wobei die Webseite zumindest teilweise basierend auf den zusätzlichen Informationen von dem Prerender-Server gerendert wird.

4. Computerimplementiertes Verfahren nach Anspruch 3, wobei die zusätzlichen Informationen eine mit dem Inhalt der Webseite verbundene Warnung umfassen.

5. System, umfassend:
einen oder mehrere Prozessoren; und
eine Speichervorrichtung, die prozessorlesbare Anweisungen enthält, die, wenn sie von dem einen oder den mehreren Prozessoren ausgeführt werden, den einen oder die mehreren Prozessoren so konfigurieren, dass sie Operationen durchführen, die Folgendes umfassen:
Senden (400) einer Anfrage für eine Webseite an einen Web-Server (108), wobei die Webseite mindestens ein Bild enthält;
vor dem Empfangen einer Antwort von dem Webserver für die Anfrage der Webseite, Senden (402) von dem Web-Client der elektronischen Vorrichtung einer Prerender-Anfrage für die Webseite an einen Prerender-Server (106), wobei sich der Prerender-Server von dem Webserver unterscheidet, wobei die Prerender-Anfrage eine Kopie der Anfrage für die Webseite ist und gleichzeitig mit der Anfrage für die Webseite an den Web-Server gesendet wird;
Serialisieren, durch den Prerender-Server, von mindestens einer Hypertext-Markup-Language-Datei für die Webseite, zumindest teilweise, durch Codieren einer separaten Binärformat-Version des mindestens einen Bildes in eine nicht von Menschen lesbare Zeichenkette, und Einbetten der nicht von Menschen lesbaren Zeichenkette in die mindestens eine serialisierte Hypertext-Markup-Language-Datei für die Webseite;
Empfangen (404) einer Prerender-Version der Webseite von dem Prerender-Server, wobei die Prerender-Version der Webseite die mindestens eine serialisierte HTML-Datei für die Webseite enthält;
Empfangen (406) der Antwort von dem Web-Server, die eine Haupt- oder Indexdatei für die Webseite umfasst;
Bereitstellen (408) der Prerender-Version der Webseite zur Anzeige während des Renderns der Webseite basierend auf der Antwort von dem Web-Server; und
nach Beendigung des Renderns, Bereitstellen (504) der gerenderten Webseite zur Anzeige anstelle der Prerender-Version der Webseite.

6. System nach Anspruch 5, wobei das Empfangen der Prerender-Version von dem Prerender-Server ein Empfangen zusätzlicher Informationen bezüglich der Webseite von dem Prerender-Server umfasst; und
wobei das System, während es Anfragen für Ressourcen in der empfangenen Haupt- oder Indexdatei für die Webseite sendet, eine Anfrage für eine Datei auslässt, die in den zusätzlichen Informationen von dem Prerender-Server als schädlich gekennzeichnet worden ist.

7. System nach Anspruch 5,
wobei die Webseite zumindest teilweise basierend auf den zusätzlichen Informationen von dem Prerender-Server gerendert wird.

8. System nach Anspruch 7, wobei die Prerender-Version der Webseite, wie sie vom Prerender-Server empfangen wird, von schädlichen Inhalten befreit ist.

## Revendications

1. Un procédé mis en œuvre par ordinateur, comprenant :
le fait (400) d'envoyer une demande de page web depuis un client web d'un dispositif électronique (102) vers un serveur web (108), la page web comportant au moins une image ;
préalablement à la réception d'une réponse en provenance du serveur web à la demande de la page web, le fait (402) d'envoyer depuis le client web du dispositif électronique une demande de pré-rendu de la page web à un serveur de pré-rendu (106), le serveur de pré-rendu étant différent du serveur web, la demande de pré-rendu étant une copie de la demande de la page web et étant envoyée au serveur web en même temps que la demande de la page web ;
le fait, par le serveur de pré-rendu, de sérialiser au moins un parmi un fichier de langage de balisage hypertexte pour la page web, au moins en partie, en codant une version distincte, au format binaire, de ladite au moins une image en une chaîne non lisible par l'homme, et en incorporant la chaîne non lisible par l'homme dans ledit au moins un fichier de langage de balisage hypertexte sérialisé pour la page web ;
le fait (404) de recevoir au niveau du client web du dispositif électronique une réponse de pré-rendu en provenance du serveur de pré-rendu, la réponse de pré-rendu comprenant une version pré-rendue de la page web incluant ledit au moins un fichier sérialisé pour la page web ;
le fait (406) de recevoir au niveau du client web du dispositif électronique la réponse provenant du serveur web, comprenant un fichier principal ou d'index de la page web ;
le fait (408), par le client web du dispositif électronique de fournir la version pré-rendue de la page web pour affichage tout en opérant le rendu de la page web sur la base de la réponse du serveur web ; et
à la fin du rendu, le fait (504) de fournir la page web rendue pour affichage à la place de la version pré-rendue de la page web.

2. Le procédé mis en œuvre par ordinateur selon la revendication 1, dans lequel la réception au niveau du client web de la réponse de pré-rendu depuis le serveur de pré-rendu comprend le fait de recevoir des informations supplémentaires concernant la page web depuis le serveur de pré-rendu ;
le client web, tout en envoyant des demandes de ressources dans le fichier principal ou d'index reçu pour la page web, omet une demande pour un fichier qui a été signalé comme étant malveillant dans les informations supplémentaires provenant du serveur de pré-rendu, et
la version pré-rendue de la page web, telle que reçue du serveur de pré-rendu a un contenu malveillant supprimé d'elle-même.

3. Le procédé mis en œuvre par ordinateur selon la revendication 2, dans lequel la page web est rendue sur la base, au moins en partie, des informations supplémentaires provenant du serveur de pré-rendu.

4. Le procédé mis en œuvre par ordinateur selon la revendication 3, dans lequel les informations supplémentaires comprennent un avertissement associé au contenu de la page web.

5. Un système comprenant :
un ou plusieurs processeurs ; et
un dispositif de mémoire comprenant des instructions lisibles par processeur, qui, lorsqu'elles sont exécutées par lesdits un ou plusieurs processeurs, configurent lesdits un ou plusieurs processeurs de façon à effectuer des opérations comprenant :
le fait (400) d'envoyer une demande de page web à un serveur web (108), la page web comportant au moins une image ;
préalablement à la réception d'une réponse en provenance du serveur web à la demande de la page web, le fait (402) d'envoyer une demande de pré-rendu de la page web à un serveur de pré-rendu (106), le serveur de pré-rendu étant différent du serveur web, la demande de pré-rendu étant une copie de la demande de la page web et étant envoyée au serveur web en même temps que la demande de la page web ;
le fait, par le serveur de pré-rendu, de sérialiser au moins un parmi un fichier de langage de balisage hypertexte pour la page web, au moins en partie, en codant une version distincte, au format binaire, de ladite au moins une image en une chaîne non lisible par l'homme, et en incorporant la chaîne non lisible par l'homme dans ledit au moins un fichier de langage de balisage hypertexte sérialisé pour la page web ;
le fait (404) de recevoir une version pré-rendue de la page web depuis le serveur de pré-rendu, la version pré-rendue de la page web comprenant ledit au moins un fichier HTML sérialisé pour la page web ;
le fait (406) de recevoir la réponse en provenance du serveur web, comprenant un fichier principal ou d'index de la page web ;
le fait (408) de fournir la version pré-rendue de la page web pour affichage tout en opérant le rendu de la page web sur la base de la réponse du serveur web ; et
à la fin du rendu, le fait (504) de fournir la page web rendue pour affichage à la place de la version pré-rendue de la page web.

6. Le système selon la revendication 5, dans lequel la réception de la version de pré-rendu depuis le serveur de pré-rendu comprend le fait de recevoir des informations supplémentaires concernant la page web depuis le serveur de pré-rendu ; et
le système, tout en envoyant des demandes de ressources dans le fichier principal ou d'index reçu pour la page web, omet une demande pour un fichier qui a été signalé comme étant malveillant dans les informations supplémentaires provenant du serveur de pré-rendu.

7. Le système selon la revendication 5, dans lequel la page web est rendue sur la base, au moins en partie, des informations supplémentaires provenant du serveur de pré-rendu.

8. Le système selon la revendication 7, dans lequel la version pré-rendue de la page web, telle que reçue du serveur de pré-rendu, a un contenu malveillant supprimé d'elle-même.
